# EUROPEAN PATENT SPECIFICATION

(11) **EP 3 294 674 B1**
(45) Date of publication and mention of the grant of the patent: **08.07.2020**
(21) Application number: 16721851.0
(22) Date of filing: 04.05.2016
(51) Int. Cl.: C02F 1/28, B01J 20/24, C02F 1/52, C08L 1/02, D01F 2/00, C08L 97/00, C02F 1/38, C02F 101/10, C02F 101/20

(54) **WATER TREATMENT**
WASSERBEHANDLUNG
TRAITEMENT DE L'EAU

(30) Priority: 13.05.2015 FI 20155351
(43) Date of publication of application: 21.03.2018
(73) Proprietor: UPM-Kymmene Corporation, 00100 Helsinki (FI)
(72) Inventor: HARTIKAINEN, Helinä, 00670 Helsinki (FI); VENÄLÄINEN, Salla, 00740 Helsinki (FI); NUOPPONEN, Markus, 00220 Helsinki (FI); MERILUOTO, Anne, 00100 Helsinki (FI)
(74) Representative: Boco IP Oy Ab
(86) International application number: PCT/FI2016/050283
(87) International publication number: WO 2016/181034

(56) References cited:
- WO-A1-01/66600
- US-A- 6 080 277
- SANNA HOKKANEN ET AL: "Adsorption of Ni(II), Cu(II) and Cd(II) from aqueous solutions by amino modified nanostructured microfibrillated cellulose", CELLULOSE, vol. 21, no. 3, 26 March 2014 (2014-03-26) , pages 1471-1487, XP055278945, Netherlands ISSN: 0969-0239, DOI: 10.1007/s10570-014-0240-4
- SANNA HOKKANEN ET AL: "Adsorption of Ni2+, Cd2+, PO43- and NO3- from aqueous solutions by nanostructured microfibrillated cellulose modified with carbonated hydroxyapatite", CHEMICAL ENGINEERING JOURNAL, vol. 252, 1 September 2014 (2014-09-01), pages 64-74, XP055278937, CH ISSN: 1385-8947, DOI: 10.1016/j.cej.2014.04.101
- KALIA SUSHEEL ET AL: "Nanofibrillated cellulose: surface modification and potential applications", COLLOID & POLYMER SCIENCE, SPRINGER VERLAG, HEIDELBERG, DE, vol. 292, no. 1, 21 November 2013 (2013-11-21), pages 5-31, XP035320488, ISSN: 0303-402X, DOI: 10.1007/S00396-013-3112-9 [retrieved on 2013-11-21]
- ALEXIS WELLS CARPENTER ET AL: "Cellulose Nanomaterials in Water Treatment Technologies", ENVIRONMENTAL SCIENCE & TECHNOLOGY, vol. 49, no. 9, 5 May 2015 (2015-05-05), pages 5277-5287, XP055279657, US ISSN: 0013-936X, DOI: 10.1021/es506351r

## Description

### FIELD OF THE INVENTION

The present invention relates generally to the use of plant-derived nanofibrillar cellulose in water treatment. More particularly, the invention relates to a process for removing ions from waste water utilizing plant-derived cationic nanofibrillar cellulose, and to the use of plant-derived cationic nanofibrillar cellulose in water treatment.

### BACKGROUND

Water treatment and purification involves removing contaminants in the water or reducing their concentration in order to make the water suitable for its desired end-use, for example for simply returning used water safely into the environment. The industry produces large amounts of waste water that needs to be purified. Waste water treatment chemicals, such as pH conditioners, coagulants, flocculants, antifoam and biocide agents are widely used, but they cause a burden on the environment.

Most contaminant species in water (raw or process water) have either negative or positive net charge. Consequently, the contaminant species with similar charge repel each other. Thus they may not be easily removed by filtration or sedimentation. Quite often the contaminant species are relatively small. It would be easier to remove small contaminant species from water if they can be flocculated first. If contaminant species have spherical shape, as suspended in a fluid medium, they settle at a rate proportional to the fourth power of the particle radius according to Stoke's Law. In order to flocculate contaminant species coagulants and/or flocculants are used.

During water purification, waste water is first screened after which the water suspension is coagulated and flocculated with the aid of chemicals. The flocculated material is then sedimented and the rest of the water is directed to filtration and disinfection processes.

Some major industries for sludge treatment chemicals are metal-processing industry, oil and gas industry, electronics industry, paints and coatings industry, power plants, textile industry, food and beverage industry, paper and pulp industry, chemicals and personal care industry, mining industry and agriculture.

Current solutions for water purification are based mainly on polyacrylamides, PolyDADMAC and aluminum sulfates, which cause further environmental burden. Natural flocculants may be based on for example gelatin, guar gum and linear polysaccharide.

There is a need for more environmentally friendly purification processes and chemicals. Furthermore, there is a need for solutions which also are economically feasible.

Aroua et al. ("Removal of chromium ions from aqueous solutions by polymer-enhanced ultrafiltration", J. Haz. Mat. 3 (2007), pp 752-758) have studied the removal of chromium species using polymer-enhanced ultrafiltration (PEUF) process. Three water soluble polymers, namely chitosan, polyethyleneimine (PEI) and pectin were used.

Also micro- or nanofibrillar celluloses have found applications also in the area of water treatment. Nanofibrillar celluloses (NFC or nanocellulose) can be derived from cellulose containing material, such as wood and other plant material. Nanocelluloses have recently found applications in various areas. In higher plants, cellulose is organized in morphologically complex structure consisting of β(1→4) D-glucopyranose chains. These chains are laterally bound by hydrogen bonds to form fibrils with a diameter in nanoscale, which are further organized in microfibril bundles. Furthermore, cellulose molecules are associated with other polysaccharides (hemicelluloses) and lignin in plant cell walls, resulting in even more complex morphologies. The cellulose micro- or nanoscale fibers can be released from the highly ordered structure by mechanical processes, optionally combined with other treatments such as chemical or enzymatic pretreatment of the cellulosic raw material. The microfibrillar or nanofibrillar celluloses obtained after mechanical processing may also be subjected to e.g. chemical treatment.

Sehaqui et al. ("Enhancing adsorption of heavy metal ions onto biobased nanofibers from waste pulp residues for application in waste water treatment", Cellulose, 21 (2014), pp 2831-2844) concerns the use of cellulose and chitin nanofibers functionalized with carboxylate entities prepared from pulp residue and crab shells, respectively, by chemically modifying the initial raw materials with 2,2,6,6-tetramethyl-1-piperidinyloxy (TEMPO) mediated oxidation. The adsorption capacity of oxidized cellulose nanofibers for metal ions, including copper(II), nickel(II), chromium(III) and zinc(II) was studied.

Suopajärvi et al. ("Coagulation-flocculation treatment of municipal waste water based on anionized nanocelluloses", Chem. Eng. J., 231 (2013) pp 59-67) discloses dicarboxylic acid nanocellulose (DCC) flocculants produced by nanofibrillation of periodate and chlorite-oxidized celluloses with a homogenizer. The flocculation performance levels of five anionic nanocelluloses with variable charge densities were examined in the coagulation-flocculation treatment of municipal waste water and the results compared with the performance of a commercial coagulant and a synthetic polymeric flocculant.

Hokkanen et al. ("Adsorption of hydrogen sulphide from aqueous solutions using modified nano/micro fibrillated cellulose", Env. Techn., 35 (2014), pp 2334-2346) concerns a study where microfibrillated cellulose (MFC) was modified by aminopropyltriethoxysilane (APS), hydroxycarbonated apatite (HAP), or epoxy in order to produce novel nanostructured adsorbents for the removal of hydrogen sulphide (H₂S) from aqueous solutions. Other examples of use of cellulose are described in WO 01/66600 A1, US 6 080 277 A.

### BRIEF DESCRIPTION OF THE INVENTION

Even though many advances have been made in the field of water treatment, there is still a need to provide improved purification chemicals and processes. More efficient and environmentally friendly chemicals and processes are needed for advanced water purification and sludge treatment. Advanced water purification may involve, for example, either removing specific contaminants from the waste water or removing a large scale of different contaminants.

The present invention thus concerns a process for removing ions from waste water as well as the use of cationic nanofibrillar cellulose in water treatment. More specifically the invention concerns the use of plant-derived cationic nanofibrillar cellulose in water treatment for removing charged contaminants. The water to be treated may be for example waste water or another aqueous solution in need of purification.

One aspect of the invention is to provide an environmental friendly water treatment chemical or additive for improved advanced purification of waste water.

The invention is based on the surprising finding that plant-derived cationic nanofibrillar cellulose is capable of binding from the water to be treated, a net charge of ions which is higher than its own net charge. Further, the inventors have also discovered that the plant-derived cationic nanofibrillar cellulose is able to remove both negatively charged contaminant species for example oxyanions such as sulfate ions and positively charged contaminant species from the water. Thus, despite the cationic charge of the nanofibrillar cellulose itself, it is able to trap and remove also positively charged contaminant species, such as metal ions.

Although the reaction mechanism is not completely known, it has been proposed that the cationic nanofibrillar cellulose used in the present invention first binds anionic components from the water. After that the anionic components already bound to the nanofibrillar cellulose can participate in the removing of cationic components from the water to be treated.

It is thus believed that plant-derived cationic nanofibrillar cellulose used in the invention is able to form complexes with anionic and cationic components leading to flocculated particles which can be removed easily from waste water. In addition to chemical bonds, the nanofibrillar cellulose probably binds further ions mechanically by trapping them in the bulky complexes that are formed when mixing the nanofibrillar cellulose and waste water. Furthermore, it is believed that the nanofibrillar celluloses catches contaminants, i.e. negatively or positively charged contaminant species when water passes through the hydrogel structure of the nanofibrillar cellulose, e.g. by filtration or centrifugation. The plant-derived cationic nanofibrillar celluloses used in this invention would thus be able to form gel matrixes like a layer of hydrogel on a top of for example a filtration fabric or membrane, which then catches both anionic and cationic impurities passing through. A method and a use according to independent claims 1 and 16 are provided which define the essential features of the invention. Preferred embodiments are described in dependent claims 2-15, 17.

One objective of the present invention is a process for removing ions from waste water. The process comprises the steps of
- providing plant-derived cationic nanofibrillar cellulose,
- using said plant-derived cationic nanofibrillar cellulose in an amount of 0.005 to 25 kg/m³ waste water based on the dry weight of the nanofibrillar cellulose, to carry out a purification treatment comprising sorption of ions, contained in the waste water, to said plant-derived cationic nanofibrillar cellulose,
- separating used plant-derived cationic nanofibrillar cellulose from the waste water, and
- recovering treated waste water.

Another objective of the present invention is the use of plant-derived cationic nanofibrillar cellulose in water treatment for removing charged contaminants, which charged contaminants include metal ions.

Yet another objective of the invention is the use of plant-derived cationic nanofibrillar cellulose in water treatment for removing charged contaminants, which charged contaminants include at least one anion selected from the following group consisting of oxyanions such as sulfate, sulfite, nitrate, phosphate, selenate, selenite, antimonite, dichromate and arsenate ions. These oxyanion species have a pKₐ₁ value of less than three and, thus, they show similar sorption behaviour with cationic nanofibrillar cellulose. Preferably the anions include sulfate ions.

Advantages of the present invention include achieving cost-effective and energy-saving process for water purification, including sludge treatment. Typically, the industries require faster and more advanced treatment solutions, usually due to increasingly strict regulations. The nanofibrillar cellulose of the invention works for complex wastewaters, since it removes both anionic and cationic contaminants. Furthermore, the purification effect is high, because the process utilizes both chemical and mechanical means. There is also a need for more environmental friendly, biodegradable chemicals. The nanofibrillar cellulose is bio-based and manufactured from a renewable, abundant resource. In addition it may be disposed of in an environmentally safe manner, if needed it can be burned safely and metals recovered can be recycled. The nanofibrillar celluloses bind metal ions by electrostatic forces and by trapping them onto the surface, thus, the metals can be released and recovered from the hydrogel. Through the new use of nanofibrillar cellulose, the amount of chemicals used in water purification may be decreased.

### BRIEF DESCRIPTION OF THE DRAWINGS

Figure 1 shows test results; the amount (mmol L⁻¹) of sulfur (S) in the solution after treatment with cationic nanofibrillar cellulose.
Figure 2 shows test results; the amounts (mmol L⁻¹) of iron (Fe), manganese (Mn) and sodium (Na) left in the solution after treatment with cationic nanofibrillar cellulose.
Figure 3 shows test results; the amounts (mmol L⁻¹) of aluminum (Al), nickel (Ni) and zinc (Zn) left in the solution after treatment with cationic nanofibrillar cellulose.

### DEFINITIONS

Unless otherwise specified, the terms, which are used in the specification and claims, have the meanings commonly used in the field of nanocellulose technology, as well as in the field of water treatment and purification. Especially, the following terms have the meanings indicated below.

As used herein, the term **"nanofibrillar cellulose"** or nanofibrillated cellulose or NFC is understood to encompass nanofibrillar structures liberated from plant based cellulosic materials, such as cellulose pulp from hardwood or softwood. The nomenclature relating to nanofibrillar celluloses is not uniform and there is an inconsistent use of terms in the literature. For example the following terms have been used as synonyms for nanofibrillar cellulose: cellulose nanofiber, nanofibril cellulose (CNF), nanofibrillated cellulose (NFC), nano-scale fibrillated cellulose, microfibrillar cellulose, cellulose microfibrils, microfibrillated cellulose (MFC), and fibril cellulose. The smallest cellulosic entities of cellulose pulp of plant origin, such as wood, include cellulose molecules, elementary fibrils, and microfibrils. Microfibril units are bundles of elementary fibrils caused by physically conditioned coalescence as a mechanism of reducing the free energy of the surfaces. The term "nanofibrillar cellulose" or NFC refers to a collection of cellulose nanofibrils liberated from cellulose pulp or cellulosic material, particularly from the microfibril units. Their diameters vary depending on the source. Nanofibrillar cellulose typically has a high aspect ratio: the length exceeds one micrometer while the diameter is typically below 100 nm. The smallest nanofibrils are similar to the so-called elementary fibrils. The dimensions of the liberated nanofibrils or nanofibril bundles are dependent on raw material, any pretreatments and disintegration method. Intact, unfibrillated microfibril units may be present in the nanofibrillar cellulose. As used herein, the nanofibrillar cellulose is not meant to encompass non-fibrillar, rod-shaped cellulose nanocrystals or whiskers.

The term **"cationic nanofibrillar cellulose"** refers to nanofibrillar cellulose, which has been chemically derivatized i.e. chemically modified to render the nanocellulose cationic by introducing positive charges on the surface thereof. For the plant-derived cationic nanofibrillar cellulose of the invention, the chemical derivatization is carried out before the production of NFC, i.e. before the mechanical disintegration of the cellulosic raw material.

The term **"cellulose pulp"** refers to cellulose fibers, which are isolated from any plant based cellulose or lignocellulose raw material, using chemical, mechanical, thermo-mechanical, or chemi-thermo-mechanical pulping processes, for example kraft pulping, sulfate pulping, soda pulping, organosolv pulping. The cellulose pulp may be bleached using conventional bleaching processes.

The term **"native cellulose pulp"** or **"native cellulose"** refers here to any cellulose pulp, which has not been chemically modified after the pulping process and the optional bleaching process.

The term **"plant-derived"** or "plant-derived cellulose material" may be wood and said wood can be from softwood tree such as spruce, pine, fir, larch, douglas-fir or hemlock, or from hardwood tree such as birch, aspen, poplar, alder, eucalyptus or acacia, or from a mixture of softwoods and hardwoods. Plant-derived non-wood materials may be for example from agricultural residues, grasses or other plant substances such as straw, leaves, bark, seeds, hulls, flowers, vegetables or fruits from cotton, corn, wheat, oat, rye, barley, rice, flax, hemp, manilla hemp, sisal hemp, jute, ramie, kenaf, bagasse, bamboo or reed, or mixtures of these.

The term **"hydrogel"** in connection with nanofibrillar cellulose refers to a form where an aqueous dispersion of the nanofibrillar cellulose has a loss tangent less than 1. Hydrogel is a polymeric material that exhibits the ability to swell and retain a significant fraction of water within its structure, but it does not dissolve in water. NFC hydrogels are formed spontaneously without formation of covalent bonds, therefore, their strength can be easily altered e.g. by dilution. The NFC hydrogel has good suspending capacity. The NFC hydrogel is so-called reversible or physical gel involving physical cross-linking by entanglement of fibrils. The interactions in the network can be disrupted by application of stress, so NFC hydrogels have shear-thinning behavior. The viscoelastic properties of plant-derived nanofibrillar cellulose hydrogel scaffold differs considerably from nanofibrillar cellulose from other sources, such as from bacterial cellulose scaffolds.

Term **"dispersion"** in connection with nanofibrillar cellulose encompasses both hydrogels of nanofibrillar cellulose but also more dilute aqueous systems not fulfilling the above requirement related to hydrogel. A dispersion is a system in which particles are dispersed in a continuous phase of a different state than the particles themselves.

### DETAILED DESCRIPTION OF THE INVENTION

The present invention concerns the use of cationic nanofibrillar cellulose as a water treatment chemical or water treatment additive. More specifically, the invention concerns a process for removing contaminants in the form of ions from waste water using plant-derived cationic nanofibrillar cellulose. The contaminants are ions with either a negative net charge, such as oxyanions or ions with positive net charge, such as metal ions.

Nanofibrillar cellulose in general is characterized by very high water retention capacity, a high degree of chemical accessibility and the ability to form stable gels in water or other polar solvents. A nanofibrillar cellulose product is typically a dense network of highly fibrillated cellulose elementary fibrils and bundles of elementary fibrils. Nanofibrillar cellulose may also contain some hemicelluloses; the amount is dependent on the plant source and pulping conditions.

The nanofibrillar cellulose of the present invention is plant-derived i.e. derived from plant based cellulosic material.

To obtain nanofibrillar cellulose with the desired properties and dimensions; mechanical disintegration of cellulosic raw material, i.e. plant-derived cellulose material, may be carried out with suitable equipment, such as a refiner, grinder, homogenizer, colloider, friction grinder, ultrasound-sonicator, fluidizer such as microfluidizer, macrofluidizer or fluidizer-type homogenizer.

Different types of nanofibrillar celluloses have different properties depending on the manufacturing method, degree of fibrillation and chemical composition. Several grades of NFC have been developed using various production techniques. The grades may have different properties and the chemical compositions of the grades also vary. Depending on the raw material source, e.g. hardwood vs. softwood pulp, different polysaccharide composition exists in the final nanofibrillar cellulose product.

Generally, derivatized grades of nanofibrillar cellulose refers to chemically or physically derivatized nanocelluloses. The derivatization may be carried out before, during or after the production of NFC, i.e. the liberation of the fibrils. For the plant-derived cationic nanofibrillar cellulose of the invention, the chemical derivatization is carried out before the production of NFC, i.e. before the mechanical disintegration of the cellulosic raw material, to provide easier disintegration, finer nanofibrillar cellulose and thereby stronger suspending power as characterized by high zero shear viscosity and yield stress even at low concentration.

The nanofibrillar cellulose of the present invention is cationic nanofibrillar cellulose. The cationic nanofibrillar cellulose is obtained through cationization. Cationization is an example of chemical derivatization, i.e. a chemical modification. Cationization, or producing cationic nanofibrillar cellulose, is a modification to render the nanocellulose cationic by introducing positive charges on the surface thereof. One example of cationization is cationizing by chemical glycidyl trialkylammoniumchloride (GTAC). Another example is introducing ammonium containing groups which can be done by treatment with epoxypropyltrimethylammonium chloride (EPTMAC). The reactions are performed as a pretreatment of cellulose pulp or other cellulosic raw material, before mechanical disintegration or liberated of the nanofibrils in other ways. The outcome of the processes is a highly charged cationic nanofibrillar cellulose. Typically, all of the raw material is modified and possible amounts of non-modified cellulose are insignificant.

The nanofibrillar celluloses particularly suitably for use in the present invention are selected from plant-derived cationic nanofibrillar celluloses and/or any combinations of different cationized nanofibrillar celluloses. Typically, the cationic nanofibrillar cellulose used in the present invention are native celluloses which have been subjected to cationization, or alternatively anionically modified celluloses which have been subjected to cationization.

Physical derivatization of cellulose to cationic cellulose may be performed by physical adsorption of cationic substances on the cellulose surface.

Derivatized grades are typically prepared from bleached cellulosed pulps. Any hemicelluloses present may also be derivatized in the derivatized grades of NFC.

Derivatized grades of nanofibrillar cellulose usually have smaller diameters and narrower size distributions than native or non-derivatized grades of nanofibrillar cellulose. The smaller the fibrils size, the larger the effective surface area. When cellulose has been derivatized, it is more labile and easier to disintegrate. Generally, the smaller fibril sized accomplished through the cationic derivatization is beneficial for the present invention.

The derivatized nanofibrillar celluloses are typically thinner than native nanofibrillar celluloses. The number average diameter for plant-derived cationic nanofibrillar cellulose may vary between 2 and 200 nm. Preferably, the number average diameter for plant-derived cationic nanofibrillar cellulose is 2 - 20 nm, more preferably 3 - 6 nm. The smallest nanofibrils are similar to so called elementary fibrils, which are typically 2 - 12 nm in diameter. The above values are estimated from Cryo-TEM images. The dimensions of the nanofibrils or nanofibril bundles are dependent on raw material and disintegration method. The length of nanofibrillar cellulose is somewhat challenging to measure accurately. The plant-derived cationic nanofibrillar cellulose typically have lengths varying between 0.3 and 50 micrometers. Preferably, the length is 0.5 - 20 micrometers, and more preferably 1 - 10 micrometers. The above values are estimated from electron microscopy or AFM images.

The degree of fibrillation can be evaluated from fiber analysis where the number of larger, only partially fibrillated entities, are evaluated. For the plant-derived cationic nanofibrillar cellulose the number of those unfibrillated particles per mg of dry sample varies from 1 to 10 000, preferably between 1 and 5000, most preferably between 1 and 1000. The fiber analysis may suitably be carried out using FiberLab analysis method.

Nanofibrillar celluloses form hydrogel structures with a desired viscosity when dispersed in an aqueous medium, such as water. Any suitable mixing or blending apparatus may be used to form the hydrogel.

The rheology of plant-derived nanofibrillar cellulose hydrogels show reversible gelation. At high stress levels a fluid-like behavior is observed whereas at low stress levels and quiescent conditions a step-wise transition to solid-like behavior occurs. Since a change in the environment does not trigger conformational changes of the polymer chains of the nanofibrillar cellulose hydrogel, the gel strength is almost constant over very broad temperature, pH, or ionic strength ranges. The cationic nanofibrillar cellulose of the invention is thus suitable to use in different types of waste waters, although the composition and pH value of different waste waters may vary broadly. In tests performed in connection with the present invention the pH value of the waste water was rather low, around pH 3. The tests were successful even though no pH adjustment chemicals were used, which is an advantage of the present invention.

In the tests performed in connection with the present invention it was found that the plant-derived cationic nanofibrillar cellulose of the invention is particularly suitable for removing charged contaminants such as negatively charged contaminant species, for example anions such as oxyanions and/or positively charged contaminant species such as metal ions from waste water or aqueous solutions. It was shown that the plant-derived cationic nanofibrillar cellulose is capable of binding a net charge of ions that is higher than its own net charge. Theoretically, it was expected that the net charge of removed ions would be the same as the charge of the nanofibrillar cellulose. Furthermore, it was discovered that the plant-derived cationic nanofibrillar cellulose of the invention is able to remove both negatively charged contaminant species and positively charged contaminant species from the water to be treated.

According to one aspect the present invention concerns a process for removing charged contaminants from waste water characterized in that the process comprises the steps of contacting waste water and plant-derived cationic nanofibrillar cellulose in an amount of 0.005 to 25 kg/m³ based on the dry weight of the nanofibrillar cellulose to facilitate sorption of charged ions contained in the waste water to said plant-derived cationic nanofibrillar cellulose, recovering treated waste water, and recovering plant-derived cationic cellulose and the sorbed charged contaminants.

According to yet another aspect, the present invention concerns use of plant-derived cationic nanofibrillar cellulose in water treatment for removing charged contaminants, for example anions, such as oxyanions and/or metal ions.

According to one embodiment of the invention the process or use comprises adding plant-derived cationic nanofibrillar cellulose to waste water in an amount of 0.005 to 25 kg/m³ or using 0.01 to 25 kg of plant-derived anionic nanofibrillar cellulose per m³ of waste water, preferably 0.01 to 18 kg of plant-derived anionic nanofibrillar cellulose per m³ of waste water based on the dry weight of the nanofibrillar cellulose. The amount may be also in the range of 0.1 to 18 kg of plant-derived anionic nanofibrillar cellulose per m³ of waste water, such as for example 0.4 to 17 kg of plant-derived anionic nanofibrillar cellulose per m³ of waste water or 0.5 to 15 kg of plant-derived anionic nanofibrillar cellulose per m³ of waste water. Preferably the amount is 0.1 to 10 kg of plant-derived anionic nanofibrillar cellulose per m³ of waste water, or more preferably 0.5 to 5 kg of plant-derived anionic nanofibrillar cellulose per m³ of waste water based on the dry weight of the nanofibrillar cellulose.

In the tests performed in connection with the present invention it was found that rather low amounts, compared to prior art solutions, of the plant-derived cationic nanofibrillar cellulose may be used in the invention and still contaminants are efficiently removed from the waste water. The lower amounts of NFC enable an economically feasible process, which may be used in industrial scale applications. Lower amounts may be used partly because the NFC of the invention was found to be able to trap a net charge of ions that is higher than its own net charge. One of the reasons for the efficient removal of contaminants obtained by the process of the present invention is believed to be the quality of the NFC, which is characterized by its zero shear viscosity, yield stress and degree of substitution values.

Nanofibrillar celluloses may form hydrogels in water. The stiffness of the nanofibrillar cellulose hydrogels can be evaluated from viscoelastic measurements of the gels. The stiffness of the nanofibrillar cellulose hydrogels reflects also ease of spreading of the hydrogels. When the viscosity is plotted as function of applied shear stress, a dramatic decrease in viscosity is seen after exceeding the critical shear stress.

The zero shear viscosity and the yield stress are important rheological parameters to describe the suspending power of the materials. These two parameters clearly separate different grades of nanofibrillar cellulose.

In connection with the present invention it was surprisingly found that nanofibrillar cellulose with certain viscosity properties can be used in water purification in a particularly effective way. In the nanofibrillar cellulose used in the invention, the length of the nanofibers in average is long enough to form fiber networks enhancing the gel forming ability of the NFC. The length of the fibers in the NFC correlates with the viscosity parameters, zero shear viscosity and the yield stress of the hydrogel. The fiber networks and gel formed by the cationic nanofibrillar cellulose in water enables the efficient trapping of charged contaminants, which has been achieved with the present invention.

According to one embodiment of the invention the plant-derived cationic nanofibrillar cellulose has a zero shear viscosity of 2,000 to 100,000 Pa·s when dispersed to a concentration of 0.5 wt.-% in water. Preferably, the plant-derived cationic nanofibrillar cellulose has a zero shear viscosity of 5,000 to 50,000 Pa·s when dispersed to a concentration of 0.5 wt.-% in water, most preferably 10,000 to 50,000 Pa·s when dispersed to a concentration of 0.5 wt.-% in water. The zero-shear viscosity may be for example 20,000 Pa·s, 30,000 Pa·s or 40,000 Pa·s when dispersed to a concentration of 0.5 wt.-% in water.

According to one embodiment of the invention the plant-derived cationic nanofibrillar cellulose has a yield stress of 2 to 50 Pa when dispersed to a concentration of 0.5 wt.-% in water. Preferably, the yield stress is in the range of 3 to 20 Pa when dispersed to a concentration of 0.5 wt.-% in water. The yield stress may be for example 4, 5, 6, 7, 8, 9, 10, 11, 12, 13, 14, 15, 16, 17, 18 or 19 Pa when dispersed to a concentration of 0.5 wt.-% in water.

Degree of polymerization (DP) of cellulose is the number of glucose units that make up one polymer molecule. The DP values of cellulose nanofibrils correlates with the aspect ratio of the nanofibrils, and may thus be used for evaluating their length. High DP values are desirable for the nanofibrillar cellulose used in the invention, because it increases the inherent tensile strength of the cellulose and, thus, increases the strength of the hydrogel. On the other hand, for example strongly hydrolyzed fibers, due to for example acidic treatment or certain chemical treatments, show substantially reduced fiber length and DP values, and such material is closer to micro- and nanocrystalline cellulose. Micro- and nanocrystalline cellulose has lower aspect rations compared to nanofibrillar cellulose and thus the properties are very different.

According to one embodiment of the invention the plant-derived cationic nanofibrillar cellulose consists essentially of cellulose I (cellulose crystal I form). Several different crystalline structures of cellulose are known. The structures correspond to the location of hydrogen bonds between and within the strands of the cellulose. Natural cellulose is cellulose I. Cellulose in regenerated cellulose fibers is cellulose II. Cellulose of higher plants consists mainly of the substructure cellulose I_{β}.

According to one embodiment of the invention the plant-derived cationic nanofibrillar cellulose comprises nanofibrillar cellulose manufactured from cellulosic raw material cationized using glycidyl trialkylammoniumchloride (GTAC).

The chemical composition or modification of nanofibrillar celluloses is commonly described as the degree of substitution (DS). Derivatization by cationization of the cellulose raw material used in the present invention is conducted to certain degree of substitutions levels prior to fibrillation/ mechanical disintegration. The degree of substitution in the chemical derivatization process can vary broadly.

According to one embodiment of the invention the plant-derived cationic nanofibrillar cellulose comprises nanofibrillar cellulose manufactured from cationized cellulosic raw material having a degree of substitution (DS) of at least 0.05. The degree of substitution may also be above 0.15. The degree of substitution for the plant-derived cationic nanofibrillar celluloses is typically between DS levels 0.05 and 0.8. Preferably, the degree of substitution for the plant-derived cationic nanofibrillar cellulose is between 0.1 and 0.45, or more preferably between 0.15 and 0.35. The degree of substitution may for example be 0.1, 0.15, 0.2, 0.25, 0.3, 0.35 or 0.4. These specific DS levels were found to be advantageous in the present invention, because with these DS levels the cationic nanofibrillar cellulose obtained after mechanical treatment has optimal properties. A hydrogel of good quality was obtained having high viscosity and high aspect ratio. In addition, the energy needed for grinding was kept on a moderate level.

According to one embodiment of the invention the pH value of the waste water is below 4. The pH of the waste water may also be below pH 3. Also other pH values are possible, such as for example pH 5, pH 6, and pH 7.

An advantage of the present invention is that no pH adjustment is necessary. In the tests the pH of waste water was 2-3 which is relatively low.

According to the disclosure, the ions to be removed comprise anions. Preferably, the anions include at least one anion selected from the group consisting oxyanions, such as sulfate, sulfite, nitrate, phosphate, selenate, selenite, antimonite, dichromate and arsenate ions. Most preferably the anions comprise sulfate ions. According to one embodiment the anions consist of sulfate and/or sulfite ions.

According to the disclosure, the ions to be removed comprise metals. Preferably, the metal ions include at least one selected from the group consisting of sodium, aluminum, iron, manganese, nickel and zinc ions, more preferably, the metal ions include sodium ions.

The purification treatment step may be continued as long as needed to obtain the desired results. The required time may vary depending on the other parameters of the water treatment, such as the amount of cationic nanofibrillar cellulose used. The purification treatment step may be continued for less than one hour or it may be continued for several hours, for example 2, 3 or 4 hours. According to one embodiment of the invention, the purification treatment step is continued for at least 5h, at least 7h, or at least 10h. Optionally and if necessary, the purification treatment may be carried out even longer, such as at least 12h, or at least 15h, or at least 24h. According to one embodiment of the invention, the process is a batch process. Optionally, the process may be repeated, i.e. used nanofibrillar cellulose may be removed and new added.

According to another embodiment of the invention, the process is a continuous process.

Optionally, the plant-derived cationic nanofibrillar cellulose of the invention may contain additives.

The plant-derived cationic nanofibrillar cellulose may be added to the waste water in form of a hydrogel or a dispersion. It may also be used in a concentrated form such as granulate, powder or the like. If it is used in a concentrated form, the production process typically comprises a drying step of the nanofibrillar cellulose.

According to one embodiment the plant-derived cationic nanofibrillar cellulose is in a form of a hydrogel comprising from 0.01 to 10 wt of nanofibrillar cellulose. Suitably, the hydrogel comprises from 0.05 to 5 wt.-%, such as from 0.07 to 4 wt.-%, or from 0.1 to 3 wt.-% of nanofibrillar cellulose.

According to one embodiment of the invention the plant-derived cationic nanofibrillar cellulose used in the invention is concentrated cationic nanofibrillar cellulose in a form of a granulate or powder having a dry content of cationic nanofibrillar cellulose in the range of 10 to 95 wt.-% based on the weight of the product. This cationic nanofibrillar cellulose is produced by cationic derivatization of the cellulosic raw material followed by mechanical treatment and thereafter drying of the obtained hydrogel, for example by ethanol treatment or pressing. The end product is cationic nanofibrillar cellulose in granulated or powder form.

Especially when the NFC is used in a concentrated form, the process for removing charged contaminants from waste water further comprises a step of pre-dispersing the plant-derived cationic nanofibrillar cellulose in an aqueous solution, such as in pure water or an aliquot of the waste water.

Optionally, the process of the invention comprises filtering and/or centrifugation. Filtering may be performed by using e.g. a filter fabric. During filtering, nanofibrillar cellulose dispersed in the waste water is able to form a hydrogel layer itself on top of the filter fabric. A layer of nanofibrillar cellulose hydrogel may also be pre-formed onto a filter fabric, after which waste water containing no NFC or containing additional NFC dispersed therein is passed through the preformed hydrogel layer and the filter fabric. Centrifugation may be performed by applying centrifugal forces to waste water containing NFC dispersed therein whereby the NFC is able to form a hydrogel layer while carried by the centrifugal forces.

Thus, according to one embodiment of the present invention the waste water is passed through a layer of cationic nanofibrillar cellulose hydrogel where the cationic nanofibrillar cellulose layer of hydrogel acts as a membrane itself, improving the purification process. The hydrogel layer is formed by the network of nanofibrils in the hydrogel and enables also mechanical trapping of contaminants i.e. negatively or positively charged contaminant species. The passing through may be carried out by filtration or by centrifugation.

According to the invention negatively and positively charged contaminants are removed from the waste water by sorption to the plant-derived cationic nanofibrillar cellulose, and/or by mechanical trapping. In other words, contaminant species are trapped into the nanofibril network of the cationic nanofibrillar cellulose.

The nanofibrillar cellulose used in the invention thus has a gel or membrane forming ability, which can be utilized in water treatment or purification according to the use and process of the present invention. This is an advantage over prior art solutions utilizing for example chitosan, pectin and PEI. Chitosan is made from crabs and shrimps and has cationic charge due to amino group. The amino group in chitosan has a pKₐ value of approximately 6.5, which leads to a protonation in acidic to neutral solution with a charge density dependent on pH and the %DA-value. This makes chitosan water soluble. Pectin is extracted from citrus fruits. Also pectin is water soluble. Polyethylenimine (PEI) or polyaziridine is a water soluble polymer. Thus, none of these have a membrane forming ability.

According to one, non-limiting, aspect no coagulant, typically no cationic coagulant is used in connection with the process or use of the present invention.

According to one embodiment of the invention the purification treatment comprises stirring or agitating a mixture of waste water and plant-derived cationic nanofibrillar cellulose. Stirring or agitating the mixture may enhance the purification treatment by allowing the cationic nanofibrillar cellulose to come in contact with a larger part of the waste water and the contaminant species therein. Stirring or agitation also keeps the reaction system aerated.

According to one embodiment of the invention the purification treatment comprises forming a layer of plant-derived cationic nanofibrillar cellulose hydrogel on a top of for example a filtration fabric or membrane, which then catches for example by sorption or mechanical trapping anionic contaminants, metal ions and other contaminants of the waste water passing through. The layer of plant-derived cationic nanofibrillar cellulose hydrogel may be formed on a top of for example a filter fabric or membrane either before contacting the waste water with the plant-derived cationic nanofibrillar cellulose or after mixing of plant-derived cationic nanofibrillar cellulose and waste water. Typically the purification treatment comprises filtration of the waste water through the layer of plant-derived cationic nanofibrillar cellulose hydrogel.

According to one embodiment the purification treatment further comprises filtration and/or centrifugation enabling trapping contaminant species contained in the waste water into a nanofibril network of said nanofibrillar cellulose. This enables the mechanical trapping of the contaminants.

The process may also comprise directing the recovered treated waste water to further purification treatments.

Known techniques in waste water treatment may be used to separate the used nanofibrillar cellulose from the waste water. The process may comprise recovering used plant-derived cationic nanofibrillar cellulose and optionally recovering contaminants such as metal ions from the recovered plant-derived cationic nanofibrillar cellulose. The process may also comprise recovering used nanofibrillar cellulose, removing water therefrom, and optionally directing the residue to incineration.

According to one embodiment of the invention the process or use comprises separating used nanofibrillar cellulose from treated waste water by utilizing filtration or centrifugation.

The water treatment of the invention may be carried out in various temperatures and conditions. The strength and flow behavior of the hydrogel which can be formed of the cationic nanofibrillar cellulose does not change in temperatures between approximately 4 and 80°C. The optimal conditions may vary depending on the waste water to be treated and other conditions of the process.

In the field of water treatment, there is a need for improvement of water purification related to removing anions that are difficult to deposit. One example is the sulfate anions (HSO₄⁻, SO₄²⁻) which are problematic in waste waters produced e.g. in power plants, industrial and mining processes. Because their precipitation as gypsum (CaSO₄) requires a high pH value and divalent cation, the precipitation requires high amounts of CaCO₃ (or CaO or Ca(OH)₂ manufactured from it) which is expensive and based on the mining of non-renewable natural resources.

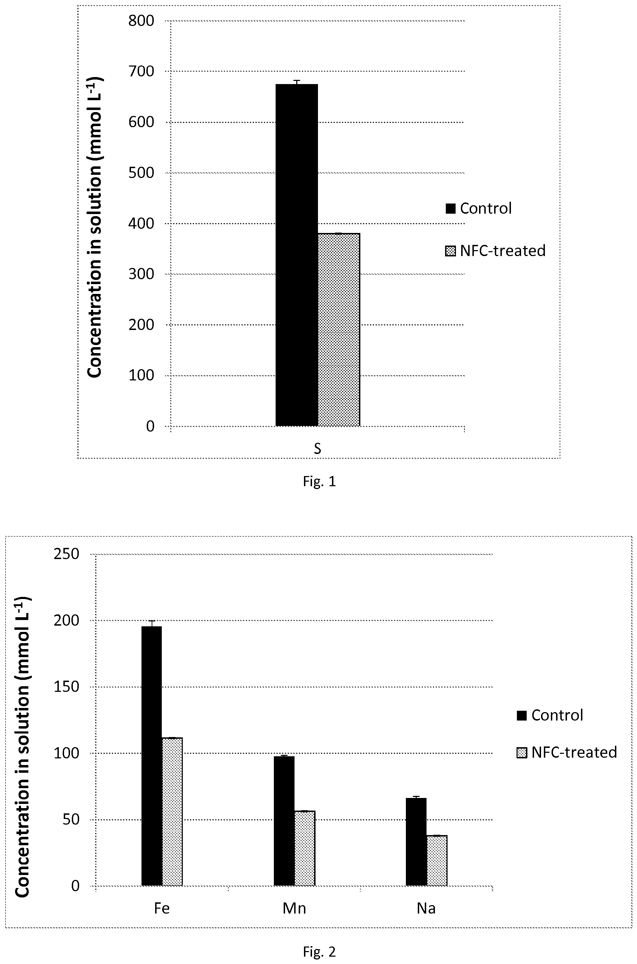

Another example is sodium ion (Na⁺), which is a problematic metal in industrial waste waters. A typical wastewater treatment facility removes very little of certain elements from the waste stream, wherefore they are passed on to the environment. Accumulation of their salts, especially those of sodium, has detrimental effects on ecosystems, if they are let into the environment. The sodium salts restrict the development of plants by limiting supply of essential nutrients and by collapsing soil structure, which leads to lack of oxygen in rhitzosphere. The problems related to sodium ions in industrial waste waters are also attributable to its very low affinity to form precipitates with common anions. The nanofibrillar cellulose of the invention, however, has been shown to remove sodium efficiently (e.g. Figure 1). According to the tests performed in relation to the present invention, over 40 wt.-% of the sodium ions were removed compared to the control sample. Furthermore, according to the test results, 1 g of added nanofibrillar cellulose per 50 ml waste water enables 30-50 wt.-% decrease in sulfur (S) content in the treated water as well as several metals (Al, Fe, Mn, Na, Ni and Zn) (Figures 1-4). The treated waste water in the tests contained several ions, i.e. it was real "multi-metal" or "multi-element" waste water.

In known prior art processes sulfur is bound from waste water with the aid of expensive liming agents which, when added in large amounts, may precipitate sulfate as gypsum (CaSO₄). The piling and storing of gypsum produced requires large soil areas. In known prior art processes, metals except for sodium are bound from waste water with the aid of chemicals and the formed flocs are removed and discharged. There is little or no recycling of the metals. According to the present invention, the used nanofibrillar celluloses can be disposed of in an environmentally safe manner. The metals may be recycled from the used nanocellulose since they are either entrapped in the gel or electrically bound to fibrils, and may thus be released through appropriate treatments of the nanofibrillar cellulose. The used nanofibrillar cellulose may also be recovered and burned, whereby the cellulose will transform to ash and metals can easily be reused.

In the next section the invention is illustrated by examples.

### EXAMPLES

Cellulose fiber was cationized using glycidyl trialkylammoniumchloride (GTAC) and NaOH and water as the catalysts. The amount of effective GTAC was 1.1 mol equivalent to cellulose OH was added. In this cationization method an aqueous solution of NaOH (in a molar ratio of 0.18 mol H₂O / 0.08 mol NaOH equivalent to cellulose OH) was mixed with GTAC in order to ensure efficient distribution of all the components, and the mixture was then added to pre-dried fiber (solid content for was ∼50 %). After this addition, the mixture was warmed to 45 °C and was left to react overnight with constant stirring. The final product was then washed with water and ethanol using filtration. Total nitrogen (g/kg) of washed samples was by Kjeldahl method. The degree of substitution (DS) can be calculated from the total nitrogen results. DS 0.32 was achieved.

Cationic pulp was dispersed to water to a consistency of 2.6 % (w/w) and run 4 times through a disperser (Atrex), through its series of counter rotating rotors. The disperser used had a diameter of 850 mm and rotation speed used was 1800 rpm. As a result, a viscous gel was obtained.

To verify the success of fibrillation, rheological measurements of the samples in the form of nanofibrillar cellulose hydrogels were carried out with a stress controlled rotational rheometer (ARG2, TA instruments, UK) equipped with four-bladed vane geometry. Samples were diluted with deionized water (200 g) to a concentration of 0.5 wt.-% and mixed with Waring Blender (LB20E*, 0.5 I) 3 x 10 sec (20 000 rpm) with short break between the mixing. Rheometer measurement was carried out for the sample. The diameters of the cylindrical sample cup and the vane were 30 mm and 28 mm, respectively, and the length was 42 mm. The steady state viscosity of the hydrogels was measured using a gradually increasing shear stress of 0.001-1000 Pa. After loading the samples to the rheometer they were allowed to rest for 5 min before the measurement was started, at room temperature. The steady state viscosity was measured with a gradually increasing shear stress (proportional to applied torque) and the shear rate (proportional to angular velocity) was measured. The reported viscosity (=shear stress/shear rate) at a certain shear stress was recorded after reaching a constant shear rate or after a maximum time of 2 min. The measurement was stopped when a shear rate of 1000 s⁻¹ was exceeded. The method was used for determining zero-shear viscosity and yield stress.

The zero-shear viscosity of the sample was 32,000 Pa·s and yield stress was 17 Pa.

The obtained plant-derived cationic nanofibrillar cellulose was used in the tests according to Example 1 to 3.

### Example 1.

### Removal of contaminants from industrial waste water with the help of cationic nanofibrillar cellulose

The purpose of the tests was to evaluate how much of the contaminants the cationic nanofibrillar cellulose was able to remove from waste water produced in an industrial mine after removal of valuable metals and before the precipitation of iron (pH 2.5).

The sample was prepared by adding 1 g of cationic nanofibrillar cellulose hydrogel (amount of cellulose nanofibrils acidic groups 1.5mol/kg, 2.2wt.-% concentration) with 50ml of acidic mine waste water (pH 2.5) in centrifuge tube. The sample was agitated for 1 hour after which the sample was left to sand at room temperature for 24 hours regarded as reaction time. After reaction time, the sample was agitated again for 10 minutes after which the sample was filtered through filter paper (Schleicher & Schüll, Blue Ribbon 589/3) into acid washed plastic bottles. Control sample was treated in a same way, however, without addition of cationic nanofibrillar cellulose.

The concentrations of sulfate (given as S), aluminum (Al), iron (Fe), manganese (Mn), sodium (Na), nickel (Ni) and zinc (Zn) ions were measured from the filtered samples by using inductively coupled plasma atomic emission spectroscopy (ICP-OES) apparatus. The amount (mol kg⁻¹) of each element removed by the cationic nanofibrillar cellulose could be calculated by subtracting the concentrations of the samples treated with nanofibrillar cellulose from the concentrations of the untreated control samples.

The industrial mine waste water contains various amounts of several contaminants from which supposedly the amount of most common ones were measured (sulfur, aluminum, iron, nickel, manganese, zinc, sodium). Sulfur in waste water was believed to be in sulfate ion form. The metals in waste water are in their oxidized form and attached to other molecules or compounds.

**Table 1. Sorption of sulfate and metals by cationic nanofibrillar cellulose in 24 hours reaction time**

| **Contaminant** | **Sorption of contaminant by dry cellulose nanofibrils [g/kg]** | **Sorption of contaminant by dry cellulose nanofibrils [mol/kg]** | **Amount of charge [mol/kg]** |
|---|---|---|---|
| **Anions** | | | |
| SO₄²⁻ (as S) | 2805 | 29.2 | -58,4 |

| **Cations** | | | |
|---|---|---|---|
| Al³⁺ | 134,9 | 5,0 | +15 |
| Fe³⁺ | 240,1 | 4,3 | + 12,9 |
| Ni²⁺ | 0,8 | 0,0135 | +0,027 |
| Mn²⁺ | 148,3 | 2,7 | +5,4 |
| Zn²⁺ | 0,2 | 0,0024 | +0,0048 |
| Na⁺ | 69,0 | 3,0 | +3,0 |
| ∑ | 593,3 | | 36,33 |

Cationic nanofibrillar cellulose was able to remove 2.8kg of sulphate and 0.59 kg of metals per 1kg of cationic nanofibrillar cellulose in 24 hours reaction time.

### Example 2.

### Removal of contaminants from industrial waste water with the help of cationic nanofibrillar cellulose

The purpose of the tests was to evaluate how much of the contaminants the cationic nanofibrillar cellulose was able to remove from waste water produced in an industrial mine after removal of valuable metals and before the precipitation of iron (pH 2.5).

The sample was prepared by adding 1 g of cationic nanofibrillar cellulose hydrogel (amount of cellulose nanofibrils acidic groups 1.5 mol/kg, 2.2 wt.% concentration) with 50 ml of waste acidic mine waste water (pH 2.5) in centrifuge tube. The sample was agitated for 1hour after which the sample was left to stand at room temperature for 7 days regarded as reaction time. After reaction time, the sample was agitated again for 10 minutes after which the sample was filtered through filter paper (Schleicher & Schüll, Blue Ribbon 589/3) into acid washed plastic bottles. Control sample was treated in a same way, however, without addition of cationic nanofibrillar cellulose.

The concentrations of sulfate (S), aluminum (Al), iron (Fe), manganese (Mn), sodium (Na), nickel (Ni) and zinc (Zn) ions were measured from the filtered samples by using inductively coupled plasma atomic emission spectroscopy (ICP-OES) apparatus. The amount (mol kg⁻¹) of each element removed by the cationic nanofibrillar cellulose could be calculated by subtracting the concentrations of the samples treated with cationic nanofibrillar cellulose from the concentrations of the untreated control samples.

Industrial mine waste water contains various amount of several contaminants from which supposedly the amount of most common ones were measured (sulfur, aluminum, iron, nickel, manganese, zinc, sodium). The sulfur in waste water was believed to be in sulfate ion form. The metals in waste water are in their oxidized form and attached to other molecules or compounds.

**Table 2. Sorption of sulfate and metals by cationic nanofibrillar cellulose in 7 days reaction time**

| **Contaminant** | **Sorption of contaminant by dry cellulose nanofibrils [g/kg]** | **Sorption of contaminant by dry cellulose nanofibrils [mol/kg]** | **Amount of charge [mol/kg]** |
|---|---|---|---|
| **Anions** | | | |
| SO₄²⁻ (as S) | 2949 | 30,7 | -61,4 |

| **Cations** | | | |
|---|---|---|---|
| Al³⁺ | 194,3 | 7,2 | +21,6 |
| Fe³⁺ | 201 | 3,6 | +10,8 |
| Ni²⁺ | 0,8 | 0,014 | +0,028 |
| Mn²⁺ | 131,9 | 2,4 | +4,8 |
| Zn²⁺ | 0,2 | 0,0025 | +0,050 |
| Na⁺ | 71,3 | 3,1 | +3,1 |
| ∑ | 599,5 | | +40,378 |

Cationic nanofibrillar cellulose was able to remove 2.9kg sulfate and 0.6 kg of metals per 1 kg of NFC in 7 days reaction time.

### Example 3.

### Treatment of waste water with nanofibrillar cellulose

In Example 3 20 g of cationic nanofibrillar cellulose hydrogel was added to a vial and mixed with 25 ml of industrial waste water (pH 3.2). The concentration of the hydrogel was 2.2wt.-%. The vial was placed in a shaking machine (light speed) for 24 hours. After mixing the sample was passed through a filter paper (Schleicher & Schüll, Blue Ribbon 589/3) into acid washed plastic bottles. The concentrations of sulfur (S) and aluminum (Al), iron (Fe), manganese (Mn), sodium (Na), nickel (Ni), zinc (Zn) ions were measured from the filtered samples by using inductively coupled plasma atomic emission spectroscopy (ICP-OES) apparatus. Control sample was treated according to the same protocol except no cationic nanofibrillar cellulose were used.

Industrial waste water contains various amount of several contaminants from which supposedly the amount of the most common ones were measured (sulfur, aluminum, iron, nickel, manganese, zinc, sodium).

Figures 1 to 3 show that cationic nanofibrillar cellulose was able to adsorb about half of the sulfur and metals in the waste water. The waste water contained a wide variety of contaminants which competed with each other about the adsorption.

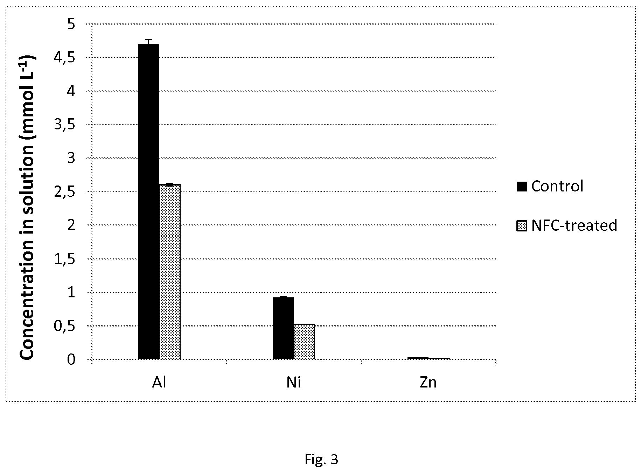

Figure 1 shows the amount (mmol L⁻¹) of sulfur (S) in the solution after treatment with cationic nanofibrillar cellulose, Figure 2 shows the amounts (mmol L⁻¹) of Fe, Mn and Na left in the solution after treatment with cationic nanofibrillar cellulose and Figure 3 shows the amounts (mmol L⁻¹) of Al, Ni and Zn left in the solution after treatment with cationic nanofibrillar cellulose. "Control" refers to the untreated waste water sample. "NFC-treated" refers to the waste water treated with cationic nanofibrillar cellulose.

### Example 4

1 g of filter pulp was weighed into the bottom of 60-mL plastic sample syringes. 5 and 10 g samples of undried NFC (equaling to 125 and 250 mg of dry NFC) were weighed into the tubes on the top of the filter pulp in three replicates. Sample syringes with filter pulp but without the NFC samples served as Controls. The sample syringes were connected to collection syringes with plastic hoses and the extraction units were attached to a vacuum extraction device. 25 ml of mine waste water was passed through the samples with a rate of 15 ml h⁻¹, collected into the collection syringes and transferred into plastic bottles. The vacuum extraction step was repeated with fresh waste water but the same NFC samples two more times. The collection syringes were changed after each of the three extraction rounds (Vac I, Vac II and Vac III) and all the samples were collected into separate bottles. The concentrations of aluminum (Al), iron (Fe), manganese (Mn) and nickel (Ni) ions were measured from all the collected samples by using inductively coupled plasma atomic emission spectroscopy (ICP-OES) apparatus. The amount (mol kg⁻¹) of each element removed by the cationic nanofibrillar cellulose could be calculated by subtracting the concentrations in the water samples treated with cationic nanofibrillar cellulose from the concentrations in the untreated control water samples.

**Table 3.** Sorption of aluminum (Al), iron (Fe), manganese (Mn) and nickel (Ni) from waste water by cationic nanofibrillar cellulose. Three fresh waste water portions were subsequently pushed in vacuum extraction device through a layer of cationic nanofibrillar cellulose hydrogel of two different addition levels.

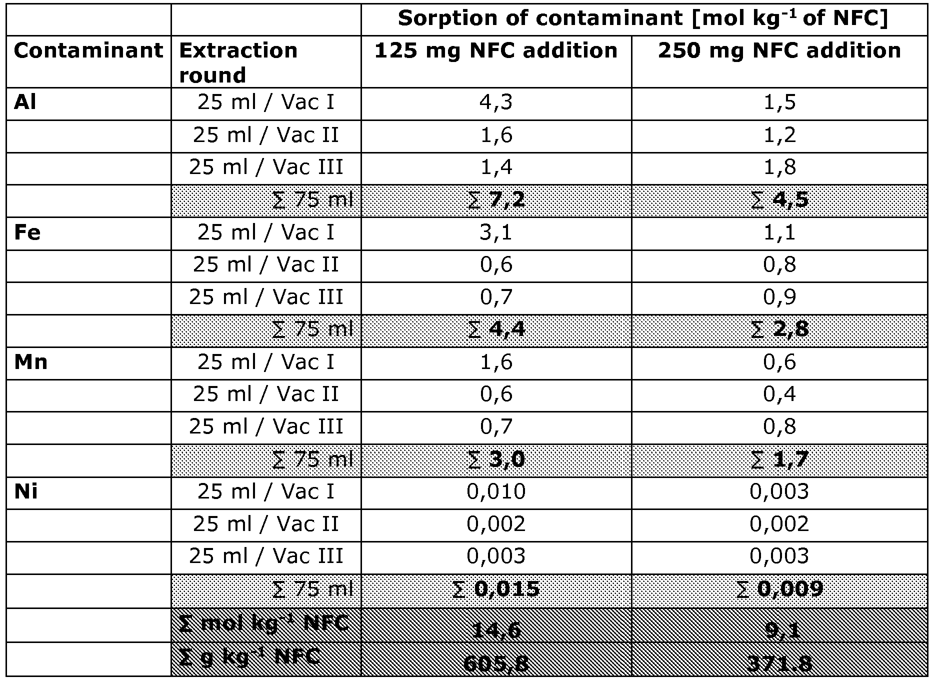

Sorption of the metals was naturally most efficient during the first vacuum extraction cycle, but the sorption efficiency remained despite of passing three different 25 ml aliquots of waste water through the same NFC sample. Interestingly, the sorption per mass of (dry) NFC was more efficient with the dosage of 125 mg (dry) NFC /25 ml than with the dosage of 250 mg (dry) NFC / 25 ml waste water. Thus, it can be concluded that even a lower NFC dosage is sufficient for metal sorption. When the dosage was 125 mg (dry) NFC, the net sorption of metals was similar to that of Example 2 involving a different procedure and reaction time of 7 days.

## Claims

1. A process for removing ions with negative and positive net charge from waste water **characterized in that** the process comprises the steps of
a. providing plant-derived cationic nanofibrillar cellulose, said plant-derived cationic nanofibrillar cellulose having a zero shear viscosity of 2,000 to 100,000 Pa·s, and/or a yield stress of 2 to 50 Pa, when dispersed to a concentration of 0.5 wt.-% in water,
b. contacting said plant-derived cationic nanofibrillar cellulose with waste water in an amount of 0.005 to 25 kg/m³ waste water based on the dry weight of the nanofibrillar cellulose, to carry out a purification treatment comprising sorption of ions, contained in the waste water, to said plant-derived cationic nanofibrillar cellulose,
c. separating used plant-derived cationic nanofibrillar cellulose from the waste water, and
d. recovering treated waste water.

2. The process according to claim 1, **characterized in that** said plant-derived cationic nanofibrillar cellulose has a zero shear viscosity of 5,000 - 50,000, preferably 10,000 to 50,000 when dispersed to a concentration of 0.5 wt.-% in water.

3. The process according to any one of the preceding claims, **characterized in that** said plant-derived cationic nanofibrillar cellulose has a yield stress of 3 to 20 Pa, when dispersed to a concentration of 0.5 wt.-% in water.

4. The process according to any one of the preceding claims, **characterized in that** said plant-derived cationic nanofibrillar cellulose comprises nanofibrillar cellulose manufactured from cationized cellulosic raw material having a degree of substitution of at least 0.05, preferably between 0.05 and 0.8, more preferably between 0.1 and 0.45, most preferably between 0.15 and 0.35.

5. The process according to any one of the preceding claims, **characterized in that** the process comprises adding plant-derived cationic nanofibrillar cellulose to waste water in an amount of 0.01 to 18 kg/m³ waste water, preferably 0.1 to 10 kg/m³ waste water, more preferably 0.5 to 5 kg/m³ waste water based on the dry weight of the nanofibrillar cellulose.

6. The process according to any one of the preceding claims, **characterized in that** the pH value of the waste water is below 4, preferably below 3.

7. The process according to any one of the preceding claims, **characterized in that** the process comprises removal of ions with negative net charge, preferably anions, more preferably anions including at least one oxyanion selected from the group consisting of sulfate, sulfite, nitrate, phosphate, selenate, selenite, antimonite, dichromate and arsenate ions, more preferably sulfate ions.

8. The process according to any one of the preceding claims, **characterized in that** the removal of ions with positive net charge comprises removal of metal ions, preferably metal ions including at least one selected from the group consisting of sodium, aluminum, iron, manganese, nickel and zinc ions.

9. The process according to any one of the preceding claims, **characterized in that** the purification treatment further comprises mixing of said plant-derived cationic nanofibrillar cellulose and said waste water.

10. The process according to any one of the preceding claims, **characterized in that** the purification treatment further comprises filtration and/or centrifugation, enabling trapping contaminant species contained in the waste water into a nanofibril network of said nanofibrillar cellulose.

11. The process according to any one of the preceding claims, **characterized in that** the purification treatment further comprises forming a layer of plant-derived cationic nanofibrillar cellulose hydrogel on a top of a filtration fabric or membrane.

12. The process according to claim 11, **characterized in that** the purification treatment further comprises passing said waste water through said layer of plant-derived cationic nanofibrillar cellulose hydrogel.

13. The process according to any one of the preceding claims, **characterized in that** the process comprises separating used nanofibrillar cellulose from treated waste water by utilizing filtration or centrifugation.

14. The process according to any one of the preceding claims, **characterized in that** said plant-derived cationic nanofibrillar cellulose consists essentially of cellulose I.

15. The process according to any one of the preceding claims, **characterized in that** said plant-derived cationic nanofibrillar cellulose comprises nanofibrillar cellulose manufactured from cellulosic raw material cationized using glycidyl trialkylammoniumchloride (GTAC).

16. Use of plant-derived cationic nanofibrillar cellulose in water treatment for removing charged contaminants **characterized in that** removing charged contaminants comprises removal of ions with negative net charge, at least one oxyanion selected from the following group consisting of sulfate, sulfite, nitrate, phosphate, selenate, selenite, antimonite, dichromate and arsenate ions, preferably the charged contaminants comprises sulfate ions and removal of ions with positive net charge, preferably metal ions.

17. Use according to claim 16, **characterized in that** the metal ions include at least one selected from the following group consisting of sodium, aluminum, iron, nickel, manganese and zinc ions.

## Patentansprüche

1. Verfahren zum Entfernen von Ionen mit negativer und positiver Nettoladung aus Abwasser, **gekennzeichnet dadurch, dass** das Verfahren die Schritte umfasst:
a. Bereitstellen einer pflanzenstämmigen kationischen nanofibrillären Cellulose, wobei die pflanzenstämmige kationische nanofibrilläre Cellulose eine Nullscherviskosität von 2.000 bis 100.000 Pa·s und/oder eine Streckspannung von 2 bis 50 Pa aufweist, wenn auf eine Konzentration von 0,5 Gew.-% in Wasser dispergiert,
b. Inkontaktbringen der pflanzenstämmigen kationischen nanofibrillären Cellulose mit Abwasser in einer Menge von 0,005 bis 25 kg/m³ Abwasser, bezogen auf das Trockengewicht der nanofibrillären Cellulose, zum Durchführen einer Reinigungsbehandlung, die die Sorption von im Abwasser enthaltenen Ionen an der pflanzenstämmigen kationischen nanofibrillären Cellulose umfasst,
c. Trennen der verwendeten pflanzenstämmigen kationischen nanofibrillären Cellulose vom Abwasser, und
d. Rückgewinnen von behandeltem Abwasser.

2. Verfahren nach Anspruch 1, **gekennzeichnet dadurch, dass** die pflanzenstämmige kationische nanofibrilläre Cellulose eine Nullscherviskosität von 5.000 bis 50.000, bevorzugt von 10.000 bis 50.000, aufweist, wenn auf eine Konzentration von 0,5 Gew.-% in Wasser dispergiert.

3. Verfahren nach einem der vorhergehenden Ansprüche, **gekennzeichnet dadurch, dass** die pflanzenstämmige kationische nanofibrilläre Cellulose eine Streckspannung von 3 bis 20 Pa aufweist, wenn auf eine Konzentration von 0,5 Gew.-% in Wasser dispergiert.

4. Verfahren nach einem der vorhergehenden Ansprüche, **gekennzeichnet dadurch, dass** die pflanzenstämmige kationische nanofibrilläre Cellulose eine nanofibrilläre Cellulose umfasst, die aus einem kationisierten cellulosehaltigen Rohmaterial mit einem Substitutionsgrad von mindestens 0,05, bevorzugt zwischen 0,05 und 0,8, bevorzugter zwischen 0,1 und 0,45, höchstbevorzugt zwischen 0,15 und 0,35, hergestellt ist.

5. Verfahren nach einem der vorhergehenden Ansprüche, **gekennzeichnet dadurch, dass** das Verfahren umfasst: Zugabe von pflanzenstämmiger kationischer nanofibrillärer Cellulose zu Abwasser in einer Menge von 0,01 bis 18 kg/m³ Abwasser, bevorzugt 0,1 bis 10 kg/m³ Abwasser, bevorzugter 0,5 bis 5 kg/m³ Abwasser, bezogen auf das Trockengewicht der nanofibrillären Cellulose.

6. Verfahren nach einem der vorhergehenden Ansprüche, **gekennzeichnet dadurch, dass** der pH-Wert des Abwassers kleiner als 4, bevorzugt kleiner als 3 ist.

7. Verfahren nach einem der vorhergehenden Ansprüche, **gekennzeichnet dadurch, dass** das Verfahren umfasst: Entfernen von Ionen mit negativer Nettoladung, bevorzugt Anionen, bevorzugter Anionen, die mindestens ein Oxyanion umfassen, ausgewählt aus der Gruppe bestehend aus Sulfat-, Sulfit-, Nitrat-, Phosphat-, Selenat-, Selenit-, Antimonit-, Dichromat- und Arsenat-Ionen, bevorzugter Sulfationen.

8. Verfahren nach einem der vorhergehenden Ansprüche, **gekennzeichnet dadurch, dass** das Entfernen von Ionen mit positiver Nettoladung umfasst: Entfernen von Metallionen, bevorzugt Metallionen, die mindestens eines aus der Gruppe der Natrium-, Aluminium-, Eisen-, Mangan-, Nickel- und Zinkionen umfassen.

9. Verfahren nach einem der vorhergehenden Ansprüche, **gekennzeichnet dadurch, dass** die Reinigungsbehandlung ferner umfasst: Mischen der pflanzenstämmigen kationischen nanofibrillären Cellulose und des Abwassers.

10. Verfahren nach einem der vorhergehenden Ansprüche, **gekennzeichnet dadurch, dass** die Reinigungsbehandlung ferner umfasst: Filtration und/oder Zentrifugierung, die das Auffangen von im Abwasser enthaltenen Verunreinigungsspezies in einem Nanofibrillennetz der nanofibrillären Cellulose ermöglicht.

11. Verfahren nach einem der vorhergehenden Ansprüche, **gekennzeichnet dadurch, dass** die Reinigungsbehandlung ferner umfasst: Ausbilden einer Schicht eines Hydrogels von pflanzenstämmiger kationischer nanofibrillärer Cellulose auf einem Filtertuch oder einer Filtermembran.

12. Verfahren nach Anspruch 11, **gekennzeichnet dadurch, dass** die Reinigungsbehandlung ferner umfasst: Durchleiten von Abwasser durch die Schicht des Hydrogels von pflanzenstämmiger kationischer nanofibrillärer Cellulose.

13. Verfahren nach einem der vorhergehenden Ansprüche, **gekennzeichnet dadurch, dass** das Verfahren umfasst: Trennen der verwendeten nanofibrillären Cellulose vom behandelten Abwasser mit Hilfe von Filtration oder Zentrifugierung.

14. Verfahren nach einem der vorhergehenden Ansprüche, **gekennzeichnet dadurch, dass** die pflanzenstämmige kationische nanofibrilläre Cellulose im Wesentlichen aus Cellulose I besteht.

15. Verfahren nach einem der vorhergehenden Ansprüche, **gekennzeichnet dadurch, dass** die pflanzenstämmige kationische nanofibrilläre Cellulose eine nanofibrilläre Cellulose umfasst, die aus einem mit Hilfe von Glycidyltrialkylammoniumchlorid (GTAC) kationisierten cellulosehaltigen Rohmaterial hergestellt ist.

16. Verwendung von pflanzenstämmiger kationischer nanofibrillärer Cellulose bei der Wasserbehandlung zum Entfernen von geladenen Verunreinigungen, **gekennzeichnet dadurch, dass** das Entfernen von geladenen Verunreinigungen umfasst: Entfernen von Ionen mit negativer Nettoladung, mindestens eines Oxyanions ausgewählt aus der folgenden Gruppe bestehend aus Sulfat-, Sulfit-, Nitrat-, Phosphat-, Selenat-, Selenit-, Antimonit-, Dichromat- und Arsenat-Ionen, wobei die geladenen Verunreinigungen bevorzugt Sulfationen umfassen, und Entfernen von Ionen mit positiver Nettoladung, bevorzugt Metallionen.

17. Verwendung nach Anspruch 16, **gekennzeichnet dadurch, dass** die Metallionen mindestens ein Ausgewähltes aus der folgenden Gruppe bestehend aus Natrium-, Aluminium-, Eisen-, Nickel-, Mangan- und Zinkionen umfassen.

## Revendications

1. Procédé pour éliminer des ions à charge nette négative ou positive des eaux usées, **caractérisé en ce que** le procédé comprend les étapes consistant à
a. fournir une cellulose nanofibrillaire cationique dérivée de plantes, ladite cellulose nanofibrillaire cationique dérivée de plantes présentant une viscosité de cisaillement zéro de 2 000 à 100 000 Pa·s et/ou une contrainte d'écoulement de 2 à 50 Pa lorsqu'elle est dispersée à une concentration de 0,5 % en poids dans de l'eau,
b. mettre la cellulose nanofibrillaire cationique dérivée de plantes en contact avec des eaux usées dans une quantité de 0,005 à 25 kg/m³ d'eaux usées, par rapport au poids sec de la cellulose nanofibrillaire, pour effectuer un traitement de purification comprenant la sorption d'ions contenus dans les eaux usées sur ladite cellulose nanofibrillaire cationique dérivée de plantes,
c. séparer des eaux usées la cellulose nanofibrillaire cationique dérivée de plantes utilisée, et
d. récupérer les eaux usées traitées.

2. Procédé selon la revendication 1, **caractérisé en ce que** la cellulose nanofibrillaire cationique dérivée de plantes présente une viscosité de cisaillement zéro de 5 000 à 50 000, préférablement de 10 000 à 50 000, lorsqu'elle est dispersée à une concentration de 0,5 % en poids dans de l'eau.

3. Procédé selon l'une des revendications précédentes, **caractérisé en ce que** la cellulose nanofibrillaire cationique dérivée de plantes présente une contrainte d'écoulement de 3 à 20 Pa, lorsqu'elle est dispersée à une concentration de 0,5 % en poids dans de l'eau.

4. Procédé selon l'une des revendications précédentes, **caractérisé en ce que** la cellulose nanofibrillaire cationique dérivée de plantes comprend une cellulose nanofibrillaire fabriquée à partir d'une matière première cellulosique cationisée présentant un degré de substitution d'au moins 0,05, préférablement compris entre 0,05 et 0,8, plus préférablement entre 0,1 et 0,45, le plus préférablement entre 0,15 et 0,35.

5. Procédé selon l'une des revendications précédentes, **caractérisé en ce que** le procédé comprend l'étape consistant à ajouter une cellulose nanofibrillaire cationique dérivée de plantes à des eaux usées dans une quantité de 0,01 à 18 kg/m³ d'eaux usées, préférablement de 0,1 à 10 kg/m³ d'eaux usées, plus préférablement de 0,5 à 5 kg/m³ d'eaux usées, par rapport au poids sec de la cellulose nanofibrillaire.

6. Procédé selon l'une des revendications précédentes, **caractérisé en ce que** la valeur pH des eaux usées est inférieure à 4, préférablement inférieure à 3.

7. Procédé selon l'une des revendications précédentes, **caractérisé en ce que** le procédé comprend l'étape consistant à éliminer des ions à charge nette négative, préférablement des anions, plus préférablement des anions comprenant au moins un oxyanion choisi dans le groupe constitué par les ions de sulfate, de sulfite, de nitrate, de phosphate, de sélénate, de sélénite, d'antimonite, de dichromate et d'arséniate, plus préférablement des ions de sulfate.

8. Procédé selon l'une des revendications précédentes, **caractérisé en ce que** l'élimination d'ions à charge nette positive comprend l'élimination d'ions de métal, préférablement d'ions de métal comprenant au moins l'un choisi dans le groupe constitué par les ions de sodium, d'aluminium, de fer, de manganèse, de nickel et de zinc.

9. Procédé selon l'une des revendications précédentes, **caractérisé en ce que** le traitement de purification comprend également l'étape consistant à mélanger ladite cellulose nanofibrillaire cationique dérivée de plantes et lesdites eaux usées.

10. Procédé selon l'une des revendications précédentes, **caractérisé en ce que** le traitement de purification comprend également une filtration et/ou centrifugation permettant d'attraper des espèces contaminantes contenues dans les eaux usées à l'intérieur d'un réseau de nanofibrilles de ladite cellulose nanofibrillaire.

11. Procédé selon l'une des revendications précédentes, **caractérisé en ce que** le traitement de purification comprend également l'étape consistant à former une couche d'hydrogel de cellulose nanofibrillaire cationique dérivée de plantes sur le dessus d'une toile ou membrane filtrante.

12. Procédé selon la revendication 11, **caractérisé en ce que** le traitement de purification comprend également l'étape consistant à acheminer lesdites eaux usées à travers ladite couche d'hydrogel de cellulose nanofibrillaire cationique dérivée de plantes.

13. Procédé selon l'une des revendications précédentes, **caractérisé en ce que** le procédé comprend l'étape consistant à séparer la cellulose nanofibrillaire utilisée des eaux usées traitées au moyen de filtration ou de centrifugation.

14. Procédé selon l'une des revendications précédentes, **caractérisé en ce que** la cellulose nanofibrillaire cationique dérivée de plantes est essentiellement constituée de cellulose I.

15. Procédé selon l'une des revendications précédentes, **caractérisé en ce que** la cellulose nanofibrillaire cationique dérivée de plantes comprend une cellulose nanofibrillaire fabriquée à partir d'une matière première cellulosique cationisée à l'aide du chlorure de glycidyltrialkylammonium (GTAC).

16. Utilisation d'une cellulose nanofibrillaire cationique dérivée de plantes dans le traitement d'eau pour éliminer des contaminants chargés, **caractérisé en ce que** l'élimination des contaminants chargés comprend l'étape consistant à éliminer des ions à charge nette négative, au moins un oxyanion choisi dans le groupe suivant constitué par les ions de sulfate, de sulfite, de nitrate, de phosphate, de sélénate, de sélénite, d'antimonite, de dichromate et d'arséniate, lesdits contaminants chargés comprenant préférablement des ions de sulfate, et éliminer des ions à charge nette positive, préférablement des ions de métal.

17. Utilisation selon la revendication 16, **caractérisé en ce que** les ions de métal comprennent au moins l'un choisi dans le groupe suivant constitué par les ions de sodium, d'aluminium, de fer, de nickel, de manganèse et de zinc.
